# EUROPEAN PATENT APPLICATION

(11) **EP 4 806 549 A1**
(43) Date of publication of application: **16.09.2026**
(21) Application number: 23959992.1
(22) Date of filing: 06.12.2023
(51) Int. Cl.: B01J 19/20

(54) **REACTION KETTLE**

(30) Priority: 28.11.2023 CN 202323220103 U
(71) Applicant: Zhejiang Comy Environment Technology Co., Ltd., Ningbo, Zhejiang 315048 (CN)
(72) Inventor: MENG, Jian, Ningbo, Zhejiang 315048 (CN); XUE, Tao, Ningbo, Zhejiang 315048 (CN); FAN, Yadong, Ningbo, Zhejiang 315048 (CN)
(74) Representative: Chung, Hoi Kan
(86) International application number: PCT/CN2023/136730
(87) International publication number: WO 2025/112088

(57) **Abstract**

A reaction kettle, comprising a reaction main body (1), a heating assembly and a stirring assembly. The reaction main body (1) is provided with a reaction chamber (11); the heating assembly is used for heating materials in the reaction chamber (11); the stirring assembly comprises a stirring shaft (31) and a spiral stirring blade group (32) which are provided in the reaction chamber (11), the spiral stirring blade group (32) being arranged on the stirring shaft (31), and at least part of the spiral stirring blade group (32) being disconnected. During operation of the reaction kettle, the stirring shaft (31) continuously stirs materials, so as to prevent gelation due to prolonged stagnation of the materials at the corners of the reaction chamber (11); when the stirring shaft (31) rotates, the spiral stirring blade group (32) may drive the materials to move towards a discharge direction, thus continuously discharging residues after reactions, preventing the materials from staying too long in the reaction kettle, and further avoiding material gelation; spiral stirring blades are discontinuous, thus avoiding gelation on the surfaces of the stirring blades.

## Description

### TECHNICAL FIELD

The present application belongs to the technical field of a pyrolysis reaction kettle for plastics, in particular to a reaction kettle.

### DESCRIPTION OF THE PRIOR ART

The market demand for plastics in China is increasing year by year, with about 40 million tons of waste plastics produced every year. However, the recycling rate of the waste plastics is low. Environmental awareness is gradually increasing, and environmental pressure is increasing. The main disposal methods of waste plastic at present are landfill and incineration. However, the bulk densities of plastic products are low, and they are not easy to decompose. Hence, in the short term, it is difficult to effectively realise the reduction and harmlessness of landfill. Incineration produces a large number of greenhouse gases, and also releases harmful gases containing dioxins and other substances. The above disposal methods cannot effectively solve the problem of "white pollution", and it is also a serious waste of petrochemical resources. Therefore, the disposal methods of waste plastics have gradually shifted from landfill and incineration to physical recycling, chemical recycling and other resource utilisation.

Chemical recycling refers to the decomposition of waste plastics into monomers or low-molecular-weight compounds through chemical reactions or catalytic pyrolysis, which are then used to synthesise new plastics or other useful products. It can realise the closed loop of plastic to plastic, and at the same time, the use of plastic products obtained through chemical recycling is the same as that of new plastic, and there is no restriction on the use of place.

At present, in the field of chemical recycling of waste plastics (catalytic pyrolysis), catalytic pyrolysis reaction kettles exist in two forms, one is a vertical reaction kettle and the other is a horizontal rotary kiln. There are obvious drawbacks in these two forms. The problems of vertical reaction kettle are that it cannot achieve continuous feeding and slagging, the working mode is intermittent, and the heat exchange area of a singular equipment is small, resulting in a small processing capacity of a singular equipment. And the intermittent working mode has high energy consumption. The horizontal rotary kiln has changed the structural mode of the vertical reaction kettle, which can achieve continuous feeding and slagging in a short time. However, its fatal problem is that it is easy to gelatinize inside. Chemical recycling of waste plastics refers to the decomposition of waste plastics into monomers or low-molecular-weight compounds through chemical reactions or catalytic pyrolysis, which are then used to synthesise new plastics or other useful products. After a period of operation, the inner wall of the reaction kettle needs to be cleaned, otherwise it will seriously affect the heat exchange of the equipment.

### Summary of the Invention

The technical problem to be solved in the present application is to provide a reaction kettle designed to solve the problem that the materials in the reaction kettle are easy to gelatinize. The reaction kettle described herein comprises a stirring assembly, which comprises a stirring shaft and a spiral stirring blade group disposed on the periphery thereof, and at least a part of the spiral stirring blade group is disconnected. Such a structure can improve the mixing efficiency of materials, especially the reacting materials during the pyrolysis of waste plastics.

In order to solve the above technical problem, the present application provides the following technical solutions.

In a first aspect, the present application provides a reaction kettle, comprising:
a reaction body provided with reaction chamber;
a heating assembly for heating materials in the reaction chamber; and
a stirring assembly comprising a stirring shaft and at least one spiral stirring blade group disposed in the reaction chamber, wherein the at least one spiral stirring blade group is disposed on the stirring shaft, and at least a part of the at least one spiral stirring blade group is disconnected.

In an embodiment of the first aspect, the spiral stirring blade group comprises a first spiral stirring blade group, the first spiral stirring blade group comprises at least one first stirring blade, and the at least one first stirring blade is disposed spirally along the circumference of the stirring shaft. At least a part of the first stirring blade of each pitch is disconnected, forming a first stirring blade gap.

In an embodiment of the first aspect, the first spiral stirring blade group comprises a plurality of first stirring blades and a plurality of first upright columns, wherein the plurality of first stirring blades are arranged sequentially, and the first upright column is disposed between two adjacent first stirring blades.

In an embodiment of the first aspect, the first upright column is aligned with the first stirring blade gap along the longitudinal direction of the stirring shaft.

In an embodiment of the first aspect, a single first stirring blade is disposed spirally along one-half of the circumference of the stirring shaft.

In an embodiment of the first aspect, the spiral stirring blade group comprises a second spiral stirring blade group, the second spiral stirring blade group comprises at least one second stirring blade, and the at least one second stirring blade is disposed spirally along the circumference of the stirring shaft;

At least a part of the second stirring blade of each pitch is disconnected, forming a second stirring blade gap;
wherein spiral directions of the first stirring blade and the second stirring blade are opposite, and a distance between a tip end of the first stirring blade and the stirring shaft is greater than a distance between a tip end of the second stirring blade and the stirring shaft.

In an embodiment of the first aspect, a pitch of the first stirring blade disposed spirally and a pitch of the second stirring blade disposed spirally are equal; and/or
the reaction body is provided with a feed port, and one-half of a difference between an area of a circle formed by rotation of the first stirring blade and an area of a circle formed by rotation of the second stirring blade is equal to an area of an inner cross-section of the feed port.

In an embodiment of the first aspect, the second spiral stirring blade group comprises a plurality of second stirring blades, wherein the plurality of first stirring blades are arranged sequentially, the first upright column is located between two adjacent first stirring blades, and the first upright column is aligned with both the first stirring blade gap and the first stirring blade gap.

In an embodiment of the first aspect, a spiral angle of the spiral stirring blade group is 65 to 75°.

In an embodiment of the first aspect, the stirring assembly comprises a driving assembly, the driving assembly is connected with one end of the stirring shaft and drive the stirring shaft to rotate; and/or
the heating assembly comprises a first heater disposed in the stirring shaft, and a cooling flow channel is disposed at a position where the stirring shaft is connected with the driving assembly, wherein the cooling flow channel is provided with a coolant inlet and a coolant outlet, and the cooling flow channel surrounds the position where the stirring shaft is connected with the driving assembly; and/or
two ends of the stirring shaft penetrate through two ends of the reaction body respectively, and the two ends of the stirring shaft are hermetically connected with the two ends of the reaction body respectively.

In an embodiment of the first aspect, the stirring shaft is hollow, and a heating element is disposed in the stirring shaft.

In an embodiment of the first aspect, the reaction body is provided with a jacket cavity, the heating assembly is provided with a second heater, and the second heater is disposed at the jacket cavity or the jacket cavity is provided with a heat carrier outlet and a heat carrier inlet; and/or
the reaction body is provided with a feed port, a discharge port and a gas outlet, the feed port and the discharge port are respectively disposed at two ends of the reaction body, and the gas outlet is disposed at the end of the reaction body where the discharge port is located;

The reaction body is provided with a temperature sensor used for detecting the materials temperature in the reaction chamber.

In an embodiment of the first aspect, the reaction kettle comprises a base which is provided with a sliding support and a fixed support, wherein the sliding support and the fixed support are respectively connected with the reaction body to support the reaction body, and the sliding support can slide on the base.

Compared with the prior art, the beneficial effects of the reaction kettle provided by the application are as follows: the reaction kettle comprises a reaction body, a heating assembly and a stirring assembly. The reaction body is provided with a reaction chamber; the heating assembly is used to heat the materials in the reaction chamber; the stirring assembly comprises a stirring shaft and a spiral stirring blade group disposed in the reaction chamber, wherein the spiral stirring blade group is disposed on the stirring shaft, and the stirring shaft extends along the length of the reaction chamber. Because when the reaction kettle operates, the stirring shaft continuously stirs the materials in the reaction chamber to prevent the materials from stagnating for too long and gelatinizing in the corner of the reaction chamber. When the stirring shaft rotates, the spiral stirring blade group can drive the materials to move along a discharging direction, so that the residue after the reaction of the materials is continuously discharged by the reaction kettle, thereby preventing the materials from staying in the reaction kettle for too long, which can further prevent the materials from gelatinizing in the reaction kettle, especially can prevent the materials gelatinizing on the stirring blades.

### BRIEF DESCRIPTION OF DRAWINGS

FIG. 1 is a schematic diagram of the overall structure of the reaction kettle of an embodiment of the present application;
FIG. 2 is a perspective view of the reaction kettle of an embodiment of the present application;
FIG. 3 is structure diagram I of the stirring assembly of an embodiment of the present application;
FIG. 4 is structure diagram II of the stirring assembly of an embodiment of the present application;
FIG. 5 is structure diagram III of the stirring assembly of an embodiment of the present application;
FIG. 6 is a comparative diagram of an area of a circle formed by rotation of the first stirring blade and an area of a circle formed by rotation of the second stirring blade of an embodiment of the present application;
FIG. 7 is a top view of the reaction kettle in FIG. 1;
FIG. 8 is a left view of the reaction kettle in FIG. 1.

In the accompanying drawings, each reference numerals represents: 1. reaction body, 11. reaction chamber, 112. jacket cavity, 1121. heat carrier inlet, 1122. heat carrier outlet, 12. feed port, 13. discharge port, 14. gas outlet, 15. temperature sensor, 31. stirring shaft, 32. spiral stirring blade group, 321. first spiral stirring blade group, 3211. first stirring blade, 3212. first upright column, 322. second spiral stirring blade group, 3221. second stirring blade, 33. driving assembly, 34. cooling flow channel, 341. coolant inlet, 342. coolant outlet, 4. base, 41. sliding support, 42. fixed support.

### DESCRIPTION OF EMBODIMENTS

Embodiments of the present application are described in detail below, and examples of the embodiments are shown in the accompanying drawings, in which the same or similar numerals from beginning to end indicate the same or similar elements or elements having the same or similar functions. The embodiments described below by reference to the drawings are illustrative and are intended to be used in the interpretation of the present application and should not be construed as a limitation on the present application. Based on the embodiments in the present application, all other embodiments obtained by those of ordinary skill in the art without making creative labor, fall within the scope of the protection of the present application.

In the description of this application, it should be understood that the orientations or positional relationships indicated by the terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "circumferential", "radial", etc., are orientations or positional relationships indicated based on the drawings and are only for the convenience of describing the present application and simplifying the description, and does not indicate or imply that the devices or elements referred to must have specific orientations, be constructed and operated in particular orientations, and therefore cannot be construed as a limitation on the present application.

In addition, the terms "first" and "second" are only used for the purpose of description and should not be construed as indicating or implying relative importance or implying the number of technical features indicated. Thus, features defined by "first" and "second" may explicitly or implicitly include one or more of these features. In the description of this application, "plurality" means two or more than two, unless otherwise expressly and specifically qualified.

The non-restrictive embodiments of the present disclosure are described in detail below in conjunction with the accompanying drawings.

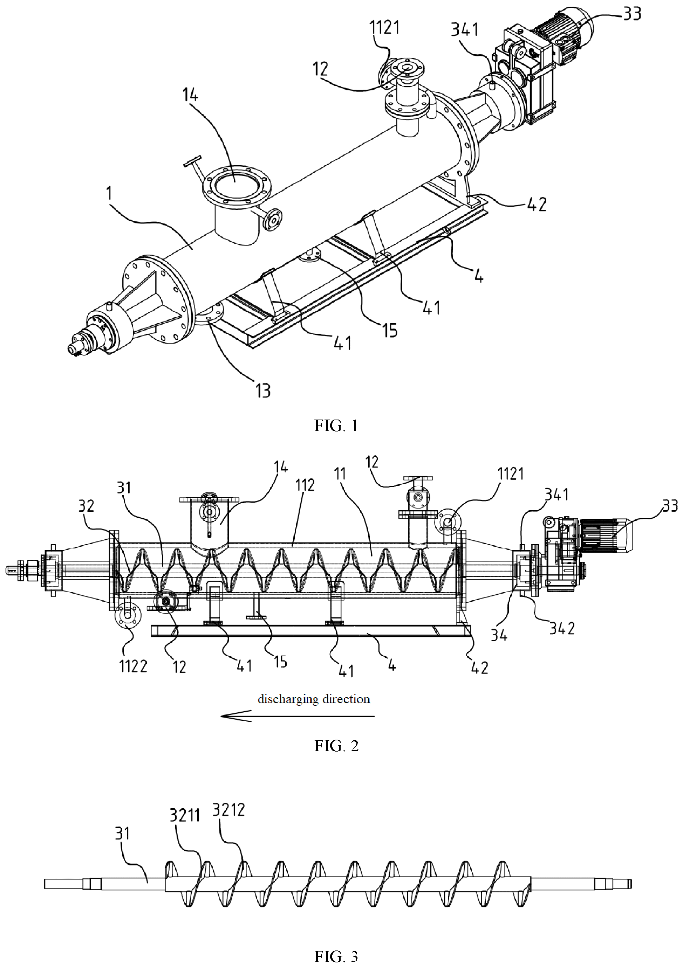

As shown in FIG. 1, which is a schematic diagram of the overall structure of the reaction kettle in an embodiment of the present application. As shown in FIG. 2, which is the perspective view of the reaction kettle in an embodiment of the present application. It can be seen from the figures that the reaction kettle comprises a reaction body 1, a heating assembly and a stirring assembly.

The reaction body 1 comprises a reaction chamber 11. The reaction body 1 is used as a reaction vessel for pyrolysis reaction, and the function thereof is to accommodate the materials and to provide the reaction environment for the materials. The main materials of reaction body 1 can be metal, which can withstand high temperature and high-pressure environments.

The heating assembly, which is used to heat the materials in the reaction chamber 11, may be disposed in the reaction body 1 to directly heat the materials, or may heat a heat carrier and then the heat carrier is passed into the reaction body 1 to heat the materials.

The stirring assembly may comprise a stirring shaft 31 and a spiral stirring blade group 32 disposed in the reaction chamber 11. The spiral stirring blade group 32 is disposed on the stirring shaft 31, and the stirring shaft 31 extends longitudinally along the reaction chamber 11. On one hand, when the reaction kettle operates, materials are added into the reaction kettle, and the stirring assembly stirs the materials continuously, so that different materials are mixed evenly, and the materials are heated evenly. On the other hand, when the stirring assembly stirs the materials, the spiral stirring blade group 32 drives the materials, so that the materials move along a discharging direction as a whole. The stirring assembly can prevent the materials from stagnating for too long and gelatinizing in the corner of the reaction chamber 11, and prevent the materials from staying in the reaction kettle for too long.

According to the technical solution of the present disclosure, by disposing a stirring shaft 31 and a spiral stirring blade group 32 in the reaction chamber 11, when the reaction kettle operates, the stirring shaft 31 continuously stirs the materials in the reaction chamber 11 to prevent the materials from stagnating for too long and gelatinizing in the corner of the reaction chamber 11. When the stirring shaft 31 rotates, the spiral stirring blade group 32 can drive the materials to move along a discharging direction, so that the residue after the reaction of the materials is continuously discharged by the reaction kettle, thereby preventing the materials from staying in the reaction kettle for too long, which can further prevent the materials from gelatinizing in the reaction kettle. The discharging direction is the direction from the feed port 12 to the discharge port 13. In a preferred embodiment, the stirring shaft 31 may be hollow, and a heating element may be disposed in the stirring shaft.

In some embodiments, as shown in FIG. 3, the spiral stirring blade group 32 comprises a first spiral stirring blade group 321. The first spiral stirring blade group 321 comprises at least one first stirring blade 3211, and the at least one first stirring blade 3211 is disposed spirally along the circumference of the stirring shaft 31. The spiral disposing of the first stirring blade 3211 along the circumference of the stirring shaft 31 can make the materials at one end where the feed port 12 of the reaction kettle is located move towards the discharge port 13 of the reaction kettle. That is, when the stirring shaft 31 rotates, the first stirring blade 3211 drives the materials in the reaction chamber 11 to move along the discharging direction. The quantity of the first stirring blade 3211 may be one or two or more. If the quantity of the first stirring blade 3211 is one, the one first stirring blade 3211 extends spirally from one end of the stirring shaft 31 to the other end. If the quantity of the first stirring blade 3211 is two or more, the two or more first stirring blades 3211 are connected end to end and extend spirally from one end of the stirring shaft 31 to the other end. In a specific embodiment, the first stirring blade 3211 is disconnected, forming a first stirring blade gap. Such structure not only improves the mixing efficiency of the materials, but also avoids the gelatinization of the materials on the surface of the stirring blade.

In some embodiments, as shown in FIG. 3, the first spiral stirring blade group 321 comprises a plurality of first stirring blades 3211 and a plurality of first upright columns 3212. The plurality of first stirring blades 3211 are arranged sequentially, and the first upright column is disposed between two adjacent first stirring blades. That is, the two adjacent first stirring blades 3211 are disconnected, and the materials can be spread out to the two sides of the first stirring blade 3211 from the gap between the adjacent two first stirring blades 3211, so that different materials can be mixed evenly, and the materials are avoided to move along the spiral first stirring blade 3211 along the discharging direction, and meanwhile the materials between the adjacent first stirring blades 3211 are isolated and cannot be evenly mixed. The materials may include catalysts, plastics, etc. On the one hand, the first column 3212 can resist the flow force when the materials flow, so as to split and disperse the flow of the materials. On the other hand, the first column 3212 can block the flow force when materials flow for the first stirring blade 3211, to avoid the first stirring blade 3211 from toppling, thereby avoiding the failure of the first stirring blade 3211.

In some embodiments, as shown in FIG. 3, a single first stirring blade 3211 is disposed spirally along one-half of the circumference of the stirring shaft. 31, so that when the materials are stirred by the first stirring blade 3211 to rotate half a turn, the materials can be spread out to both sides of the gap between the adjacent two first stirring blades 3211.

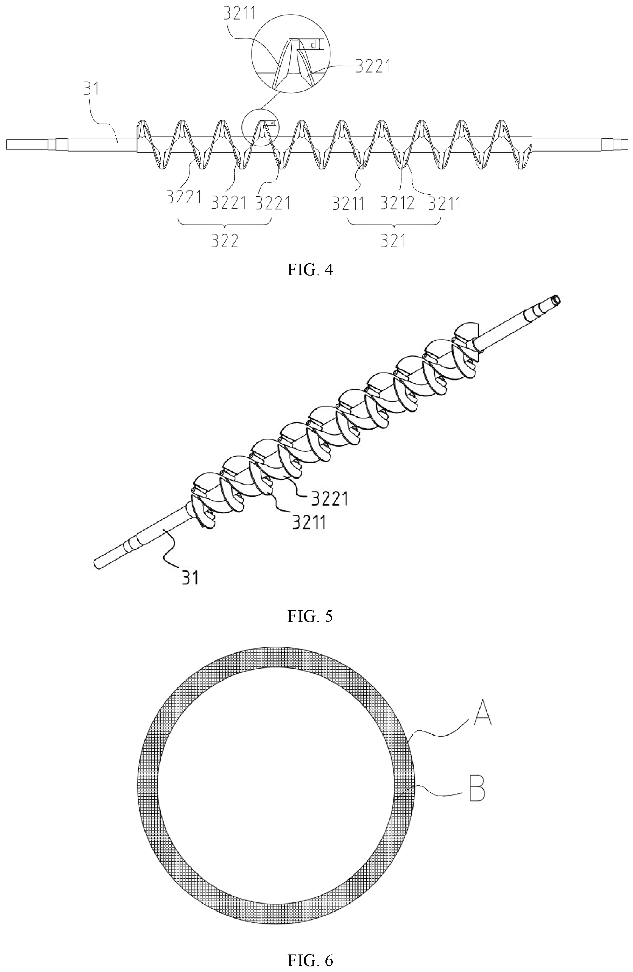

In some embodiments, as shown in FIGS. 4 and 5, the spiral stirring blade group 32 comprises a second spiral stirring blade group 322. The second spiral stirring blade group 322 comprises at least one second stirring blade 3221, and the at least one second stirring blade 3221 is disposed spirally along the circumference of the stirring shaft. At least a part of the second stirring blade 3221 is disconnected, forming a second stirring blade gap. The spiral directions of the first stirring blade 3211 and the second stirring blade 3221 are opposite. It is understandable that when the stirring shaft 31 rotates, the second stirring blade 3221 drives the materials to move along the opposite direction to the discharging direction to move in the opposite direction of movement of the materials stirred by the first stirring blade 3211, so that the materials moving in the two directions collides and mixes evenly. The distance between the tip end of the first stirring blade 3211 and the stirring shaft 31 is greater than the distance between the tip end of the second stirring blade 3221 and the stirring shaft 31, that is, the size of the first stirring blade 3211 is larger than the size of the second stirring blade 3221, and more materials can be driven to move along the discharging direction than the second stirring blade 3221, so that when the stirring shaft 31 rotates, on the whole, the stirring assembly drives the materials to move along the discharging direction. For example, as shown in FIG. 4, the difference between the distance between the tip end of the first stirring blade 3211 and the stirring shaft 31 and the distance between the tip end of the second stirring blade 3221 and the stirring shaft 31 is d. The first stirring blade 3211 and the second stirring blade 3221 are thus arranged, so that the materials in the reaction chamber 11 can be mixed evenly, and the material can be guided to move continuously towards the discharge port 13.

In some embodiments, the pitch of the first stirring blade 3211 disposed spirally and the pitch of the second stirring blade 3221 disposed spirally are equal, hence the first stirring blade 3211 and the second stirring blade 3221 can intersect at the position of the first column 3212. The materials collide at the position of the first column 3212, and the first column 3212 can block the flow force of the flow of the material. Moreover, the materials are dispersed at the gap between the adjacent two first stirring blades 3211 and/ or the gap between the adjacent two second stirring blades 3221, so that different materials can be fully mixed. That is, the first column 3212 can effectively prevent the materials from only being pushed forward and backward so that the materials are accumulated and coking. The first column 3212 mainly plays the role of breaking up the accumulated material. In a specific embodiment, the first upright column 3212 can be aligned with the first stirring blade gap and the second stirring blade gap along the longitudinal direction of the stirring shaft 31.

In some embodiments, as shown in FIG. 6, on the basis of the design that the spiral stirring blade group 32 includes the second spiral stirring blade group 322, and the distance between the tip end of the first stirring blade 3211 and the stirring shaft 31 is greater than the distance between the tip end of the second stirring blade 3221 and the stirring shaft 31, the reaction body 1 is provided with a feed port 12, and one-half of the difference between the area of the circle A formed by rotation of the first stirring blade 3211 and the area of the circle B formed by rotation of the second stirring blade 3221 is equal to the area of the inner cross-section of the feed port 12. It is understandable that the size of the first stirring blade 3211 is proportional to the amount of material driven, and the size of the second stirring blade 3221 is proportional to the amount of material driven. In the above embodiments, it is known that the size of the first stirring blade 3211 is larger than the size of the second stirring blade 3221, and the first stirring blade 3211 can drive more materials to move along the discharging direction than the second stirring blade 3221. Then one-half of the difference between the amount of material that the first stirring blade 3211 can drive and the amount of the material that the second stirring blade 3221 can drive is the amount of material moving along the outlet direction. Therefore, the inner cross-sectional area of the feed port 12 is set to one-half of the difference between the area of the circle A area formed by the rotation of the first stirring blade 3211 and the area of the circle B formed by the rotation of the second stirring blade 3221, so that the feed amount and the reaction amount of materials in the reaction chamber can be equal, and the materials can be fully reacted in the reaction chamber 11.

For example, the structure of equal inner diameter, equal pitch, and unequal outer diameter is adopted to the first spiral stirring blade group 321 and the second spiral stirring blade group 322. The materials moving along the discharge direction are greater than the materials moving in the opposite direction, so that the materials can be transported in the discharge direction and can also be controlled to maintain a certain amount of accumulation in each pitch. At the same time, a full contact between the materials and the heating source in the reaction kettle can be controlled more evenly, and the heat exchange efficiency of the reaction kettle can be improved. Specifically, one-half of the difference between the area of the circle formed by the rotation of the first stirring blade 3211 and the area of the circle formed by the rotation of the second stirring blade 3221 is approximately equal to the area of the inner cross-section of the feed port 12. For instance, the radius of the circle formed by the rotation of the first stirring blade 3211 is R (can be calculated by taking the inner radius of the reaction kettle shell, and assuming that the inner radius of the reaction kettle is 300 mm), the radius of the circle formed by the rotation of the second stirring blade 3221 is r, and the inner radius of the feed port 12 is 100 mm (radius), that is, (3.14×R²-3.14×r²)÷2=3.14×1², and the r≈264.5mm is calculated by substituting the data.

For example, the pitches of the first spiral stirring blade group 321 and the second spiral stirring blade group 322 should not be too large or too small, and it is advisable to have the spiral angle of 70±5 ° (the pitch is about 200 mm). The spiral conveying angles of the first spiral stirring blade group 321 and the second spiral stirring blade group 322 are opposite, i.e., the first stirring blade 3211 and the second spiral stirring blade group 322 are inclined in opposite directions. A too large pitch will cause the rapid advancement of the materials, and it is difficult to form the back and forth stirring of the material flow, while a too small pitch is easy to cause the accumulation and extrusion of the materials, which is not conducive to the heating of the materials to carry out the pyrolysis reaction quickly.

In some embodiments, the second spiral stirring blade group 322 comprises a plurality of second stirring blades 3221, the plurality of second stirring blades 3221 are arranged sequentially, and the first upright column 3212 is disposed between two adjacent second stirring blades 3221. That is, the two adjacent second stirring blades 3221 are disconnected, and the materials can be spread out to the two sides of the second stirring blade 3221 from the gap between the adjacent two second stirring blades 3221, so that different materials can be mixed evenly, and the materials are avoided to move along the spiral second stirring blade 3221 along the discharging direction, and meanwhile the materials between the adjacent second stirring blades 3221 are isolated and cannot be evenly mixed. The materials may include catalysts, plastics, etc. On the one hand, the first column 3212 can resist the flow force when the materials flow, so as to split and disperse the flow of the materials. On the other hand, the first column 3212 can block the flow force when materials flow for the second stirring blade 3221, to avoid the second stirring blade 3221 from toppling, thereby avoiding the failure of the second stirring blade 3221. Understandably, the material flow stirred by the first stirring blade 3211 and the material flow stirred by the second stirring blade 3221 collide at the position where the first column 3212 is located, and the materials are easy to accumulate at the place of collision. During rotation, the first column 3212 can break up the accumulated materials. That is, the first column 3212 can effectively prevent the materials from only being pushed forward and backward so that the materials are accumulated and coking. The first column 3212 mainly plays the role of breaking up the accumulated material.

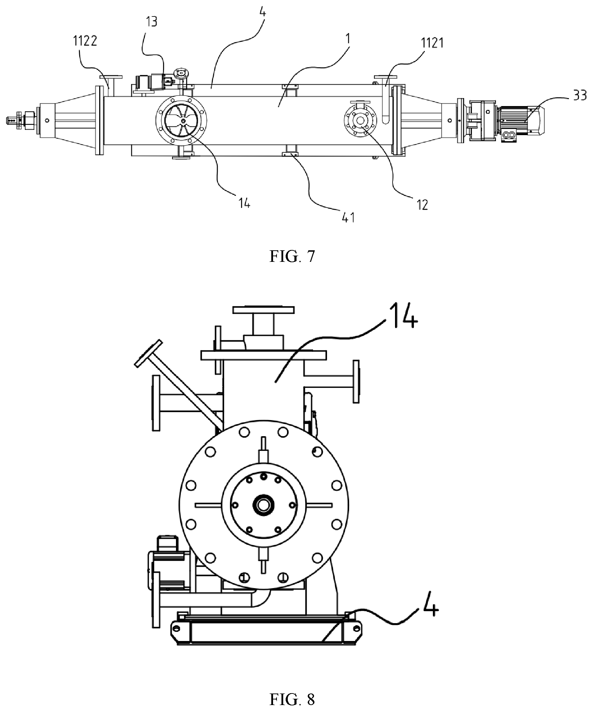

In some embodiments, as shown in FIGS. 1, 2 and 7, the stirring assembly comprises a driving assembly 33. The driving assembly 33 is connected with one end of the stirring shaft 31 and drive the stirring shaft 31 to rotate. The drive assembly 33 comprises a motor, an output shaft, a coupling and the like. The reaction kettle is provided with a mounting seat (not identified in the FIG.), and the mounting seat is used for mounting the drive assembly 33.

In some embodiments, the heating assembly comprises a first heater (not identified in the figures). The first heater is disposed in the stirring shaft 31 and can heat the stirring shaft 31, so that the materials can be heated when being in contact with the stirring shaft 31. A cooling flow channel 34 is disposed at a position where the stirring shaft 31 is connected with the driving assembly 33. The cooling flow channel 34 is provided with a coolant inlet 341 and a coolant outlet 342, and the cooling flow channel 34 surrounds the position where the stirring shaft 31 is connected with the driving assembly 34. The stirring shaft 31 is connected with the driving assembly 33, hence the cooling channel 34 can be disposed to cool down the position where the stirring shaft 31 is connected with the driving assembly 33, so as to avoid heat transfer to the driving assembly 33, thereby avoiding burning out the driving assembly 33. The cooling method is using coolant to cool down, which has a good cooling effect, and tap water is used as the coolant, which has a good cooling effect and low cost.

In some embodiments, two ends of the stirring shaft 31 penetrate through two ends of the reaction body 1 respectively, and the two ends of the stirring shaft 31 are hermetically connected with the two ends of the reaction body 1 respectively. The material reaction needs to be carried out in a sealed environment to avoid the entry of outside air, so as to avoid the oxygen in the air from reacting with the material to form harmful gases, such as dioxins. For example, a sealing scheme combining packing seals and mechanical seals is adopted for the two ends of the stirring shaft 31 and the two ends of the reaction body 1, which solves the sealing problem of the reaction body 1, can realize the catalytic pyrolysis under micro positive pressure, can improve the liquid product yield of material catalytic pyrolysis, and can prevent air from entering the reaction kettle to produce dioxin pollution.

In some embodiments, as shown in FIG. 3, the reaction body 1 is provided with a jacket chamber 112, the heating assembly is provided with a second heater (not identified in the FIG.), and the second heater is disposed in the jacket chamber 112 to directly heat the materials in the reaction chamber 11.

In other embodiments, as shown in FIG. 2, the reaction body 1 is provided with a jacket chamber 112, the jacket chamber 112 is provided with a heat carrier outlet 1122 and a heat carrier inlet 1121, and the heating assembly is provided with a second heater. After the second heater heats the heat carrier, the heat carrier is filled into the jacket cavity 112 from the heat carrier inlet 1121, and after the heat carrier transfers heat to the materials in the reaction chamber 11, it flows out from the heat carrier outlet 1122.

In some embodiments, as shown in FIGS. 1, 2, 7 and 8, the reaction body 1 is provided with a feed port 12, a discharge port 13 and a gas outlet 14, and the feed port 12 and the discharge port 13 are respectively disposed at two ends of the reaction body 1, so that the materials can fully react in the reaction chamber 11. The gas outlet 14 is disposed at one end of the reaction body 1 where the discharge port 13 is located.

For example, waste plastics enter the reaction kettle from the feed port 12, and are directly heated or indirectly heated by the first heater and the second heater inside the reaction kettle. During the heating, by continuously stirring of the stirring shaft 31 in the reaction chamber 11, the waste plastics are evenly heated, and a pyrolysis reaction occurs to generate gaseous products and solid carbon slags. The gaseous products are discharged from the upper gas outlet 14 of the reaction kettle, and the powder carbon slags are discharged from the discharge port 13.

In some embodiments, the reaction body 1 is provided with a temperature sensor 15 which is used for detecting the material temperature in the reaction chamber 11. The heating assembly is controlled to heat according to the material temperature, so that the material temperature in the reaction chamber 11 is adjusted to control the pyrolysis reaction in the reaction chamber 11.

In some embodiments, the reaction kettle comprises a base 4 which is provided with a sliding support 41 and a fixed support 42. The sliding support 41 and the fixed support 42 are respectively connected with the reaction body 1 to support the reaction body 1, and the sliding support 41 can slide on the base 4. The position of the sliding support 41 can be moved to adjust the position connected with the reaction body 1, so that the reaction body 1 is placed more evenly on the base 4.

The foregoing are only some better embodiments of the present application and are not intended to limit the present application, and any modifications, equivalent substitutions and improvements, etc., made within the spirit and principles of this application shall be included in the scope of protection of this application.

## Claims

1. A reaction kettle, comprising:
a reaction body provided with a reaction chamber;
a heating assembly for heating materials in the reaction chamber; and
a stirring assembly comprising a stirring shaft and a spiral stirring blade group disposed in the reaction chamber, wherein the spiral stirring blade group is disposed on the stirring shaft, and at least a part of the spiral stirring blade group is disconnected.

2. The reaction kettle of claim 1, wherein the spiral stirring blade group comprises a first spiral stirring blade group, wherein the first spiral stirring blade group comprises at least one first stirring blade, and the at least one first stirring blade is spirally disposed along a circumference of the stirring shaft;
wherein at least a part of the first stirring blade of each pitch is disconnected, forming a first stirring blade gap.

3. The reaction kettle of claim 2, wherein the first spiral stirring blade group comprises a plurality of first stirring blades and a plurality of first upright columns, wherein the plurality of first stirring blades are sequentially arranged, and the first upright column is disposed between two adjacent first stirring blades.

4. The reaction kettle of claim 3, wherein the first upright column is aligned with the first stirring blade gap along the longitudinal direction of the stirring shaft.

5. The reaction kettle of claim 3, wherein a single first stirring blade is disposed spirally along one-half of the circumference of the stirring shaft.

6. The reaction kettle of claim 3, wherein the spiral stirring blade group comprises a second spiral stirring blade group, the second spiral stirring blade group comprises at least one second stirring blade, and the at least one second stirring blade is spirally disposed along the circumference of the stirring shaft;
wherein at least a part of the second stirring blade of each pitch is disconnected, forming a second stirring blade gap;
wherein spiral directions of the first stirring blade and the second stirring blade are opposite, and a distance between a tip end of the first stirring blade and the stirring shaft is greater than a distance between a tip end of the second stirring blade and the stirring shaft.

7. The reaction kettle of claim 6, wherein a pitch of the first spirally disposed stirring blade and a pitch of the second spirally disposed stirring blade are equal; and/or
the reaction body is provided with a feed port, and one-half of a difference between an area of a circle formed by the rotation of the first stirring blade and an area of a circle formed by the rotation of the second stirring blade is equal to an area of an inner cross-section of the feed port.

8. The reaction kettle of claim 6, wherein the second spiral stirring blade group comprises a plurality of second stirring blades, wherein the plurality of first stirring blades are sequentially arranged , the first upright column is located between two adjacent first stirring blades, and the first upright column is aligned with both the first stirring blade gap and the first stirring blade gap.

9. The reaction kettle of any one of claims 1-7, wherein a spiral angle of the spiral stirring blade group is 65 to 75°.

10. The reaction kettle of any one of claims 1-7, wherein the stirring assembly comprises a driving assembly, the driving assembly is connected with one end of the stirring shaft and drives the stirring shaft to rotate; and/or
the heating assembly comprises a first heater disposed in the stirring shaft, and a cooling flow channel is disposed at a position where the stirring shaft is connected with the driving assembly, wherein the cooling flow channel is provided with a coolant inlet and a coolant outlet, and the cooling flow channel surrounds the position where the stirring shaft is connected with the driving assembly; and/or
two ends of the stirring shaft penetrate through two ends of the reaction body respectively, and the two ends of the stirring shaft are hermetically connected with the two ends of the reaction body respectively.
